# EUROPÄISCHE PATENTSCHRIFT

(11) **EP 3 117 954 B1**
(45) Veröffentlichungstag und Bekanntmachung des Hinweises auf die Patenterteilung: **10.06.2020**
(21) Anmeldenummer: 16177815.4
(22) Anmeldetag: 04.07.2016
(51) Int. Cl.: B23Q 7/04, B23Q 39/04

(54) **BEARBEITUNGSMASCHINE MIT WERKSTÜCKBELADEEINRICHTUNG**
PROCESSING MACHINE WITH WORKPIECE LOADING DEVICE
MACHINE D'USINAGE COMPRENANT UN DISPOSITIF DE CHARGEMENT DE PIECES A USINER

(30) Priorität: 15.07.2015 DE 102015111468
(43) Veröffentlichungstag der Anmeldung: 18.01.2017
(73) Patentinhaber: Gebr. Heller Maschinenfabrik GmbH, 72622 Nürtingen (DE)
(72) Erfinder: Wiest, Sebastian, 73240 Wendlingen (DE)
(74) Vertreter: Rüger Abel Patentanwälte PartGmbB

(56) Entgegenhaltungen:
- EP-A1- 2 805 794
- DE-A1- 1 950 617
- DE-A1- 3 329 619
- DE-U1- 29 907 963

## Beschreibung

Die Erfindung betrifft eine Bearbeitungsmaschine zur gruppenweisen Bearbeitung mehrerer Werkstücke, insbesondere Wellen, speziell Kurbelwellen.

Aus der Praxis sind Kurbelwellenbearbeitungsmaschinen bekannt, mit denen sich gleichzeitig mehrere Kurbelwellen bearbeiten lassen, die in der Maschine gleichzeitig aufgenommen und parallel zueinander orientiert sind. Zu der Bearbeitungsmaschine gehört ein Manipulator, der einen um eine Horizontalachse schwenkbaren Teileträger aufweist. Der Teileträger weist an seiner Oberseite und an seiner Unterseite, d.h. an zwei diametral voneinander weg weisenden Seiten Werkstückaufnahmeplätze auf. Diese können in Horizontallage oder in Vertikallage geschwenkt werden. In Horizontallage werden sie bestückt, während sie zur Übergabe der Teile an die Bearbeitungsmaschine in Vertikallage geschwenkt werden. Dabei ist stets eine der Teilegruppen entweder in Werkstückübergabeposition oder in Bestückungsposition, während die jeweils andere Teilegruppe jeweils in einer inaktiven, weder zur Bestückung noch zur Übergabe geeigneten Position angeordnet ist.

Aus der EP 2 805 794 A1 ist eine Werkzeugmaschine zum gleichzeitigen Bearbeiten von mehreren Kurbelwellen bekannt, die in der Maschine in entsprechenden Aufnahmen parallel zueinander angeordnet sind. Zur Bewirkung des Werkzeugwechsels ist eine Werkzeugwechselvorrichtung vorgesehen, die in der Maschine gespannten Kurbelwellen zugleich ergreifen und aus der Maschine herausführen und dafür eine andere Gruppe von zu bearbeitenden Kurbelwellen in die Werkzeugmaschine einführen kann.

Es ist Aufgabe der Erfindung, eine Bearbeitungsmaschine zu schaffen, die Totzeiten vermeidet und eine besonders übersichtliche Teilehandhabung ermöglicht.

Zur Lösung dieser Aufgabe weist die erfindungsgemäße Bearbeitungsmaschine die Merkmale des Anspruchs 1 auf. Danach weist das Werkstückmagazin wenigstens zwei Teilgruppen von Werkstückaufnahmeplätzen auf, die mittels einer Gruppentransporteinrichtung ihre Plätze tauschen können. Dabei befindet sich sowohl vor dem Platzwechsel aus auch nach dem Platzwechsel eine der Teilgruppen in Ladeposition und die andere Teilgruppe in Übergabeposition. Zum Einführen der Teile in die Bearbeitungsmaschine und zum Herausführen aus dieser ist lediglich noch eine Axialbewegung des Werkstückmagazins in Betracht gezogen. Der Teilewechsel wird dadurch so vereinfacht, dass in der Ladezone keine Schwenkbewegungen des Werkstückmagazins mehr erforderlich sind. Hat das Werkstückmagazin beispielsweise Werkstücke aus den Spindeln übernommen und nach Platzwechsel der beiden Teilgruppen neue Werkstücke in die Spindeln eingesetzt, befinden sich die bearbeiteten Werkstücke bereits in Lade- und Entladeposition. Allenfalls ist eine Linearbewegung des Werkstückmagazins erforderlich, um in den Zugangsbereich eines Portalladers zu kommen. Dieser führt die Werkstücke, zum Beispiel Kurbelwellen, zu nachgelagerten Prozessen und führt danach neue Werkstücke von vorgelagerten Prozessen an das Werkstückmagazin heran, um dieses zu bestücken. Umfasst die Teilgruppe drei Werkstücke (drei Kurbelwellen) sind dazu sechs Einzelentlade- und Ladevorgänge erforderlich, bei denen der Portallader je nach Maschinenaufstellung zum Teil große Wege zurücklegen muss. Arbeiten vor- oder nachgelagerte Maschinen seriell Wellen oder sonstige Teile einzeln ab, kann es dort zu Wartezeiten kommen. Hier erbringt die Erfindung den Vorteil, dass das Zeitfenster für das Be- und Entladen des Werkstückmagazins besonders groß, insbesondere nicht durch Positionierbewegungen, insbesondere Schwenkbewegungen des Werkstückmagazins eingeschränkt ist. Dieser Vorteil kommt auch beim manuellen Laden und Entladen der Bearbeitungsmaschine zum Tragen. Hier kommt noch der Aspekt des Unfallschutzes hinzu.

Die Bearbeitungsmaschine ist vorzugsweise eine Maschine zur Wellenbearbeitung. Die Wellen werden vorzugsweise an jeweils einem ihrer Enden aufgenommen. Die dazu vorgesehenen Spannvorrichtungen sind meist herkömmliche Vorrichtungen, welche über pneumatische, elektrische oder hydraulische Greifer die Wellen an den zukünftigen Lagersitzen spannen. Je nach Bearbeitungsoperation kommen auch Spannfutter zum Fassen des jeweils einen Wellenendes zum Einsatz. An dem gegenüber liegenden Ende der Welle kann eine Abstützeinrichtung ansetzen. Diese kann das Wellenende umfassen und die Stirnseite freilassen oder alternativ als Zentrierdorn ausgebildet sein. Die Bearbeitung der Welle, insbesondere Kurbelwelle, kann prinzipiell jede Dreh-, Bohr- oder Fräsbearbeitung sein. Vorzugsweise handelt es sich bei der erfindungsgemäßen Bearbeitungsmaschine um eine Maschine zum -Ablängen und Zentrieren einer Kurbelwelle, Ölkanal bohren sowie zur Flanschbearbeitung (CDE= centering, drilling, endmachining). Die Spannfutter sind in diesem Fall von einer Drehpositioniereinrichtung angetrieben, die die Wellen während der Bearbeitung in gegebener Winkelposition hält. Es sind aber auch Anwendungen möglich, bei denen die Welle drehend bearbeitet wird, beispielsweise beim Drehfräsen von Rundflächen, z.B. Lagerzapfen oder Hubzapfen. In diesem Fall werden die Spannfutter drehend angetrieben.

Das Werkzeugmagazin kann nach dem Paternoster-Prinzip ausgebildet sein und dazu Endlosketten aufweisen, zwischen denen Teileträger gehalten sind. Die Teileträger können mit Klemmvorrichtungen zum Halten der Wellen versehen sein, die die Wellen drehfest arretieren, um sie winkelrichtig zu halten.

Es ist aber auch möglich, die Teileträger mit den im Umlauf geführten Endlosketten an Schwenklagern zu verbinden, wobei die Schwenklager zueinander parallele Schwenkachsen festlegen, die seitlich zueinander versetzt sind. Damit behalten die Teileträger beim Umlauf der Endloskette, insbesondere, wenn diese ebenfalls gegeneinander versetzt sind, ihre räumliche Orientierung bei. Dies eröffnet die Möglichkeit, anstelle von Klemmzangen oder dergleichen arretierenden Teileaufnahmemitteln Werkstückaufnahmen vorzusehen, in die die Wellen eingelegt sind, ohne sie festzuklemmen.

Dieses Konzept kann außerdem und unabhängig von der Ausbildung der Werkstückaufnahmemittel weitere Teilgruppen von Aufnahmeplätzen aufweisen und somit als Puffer arbeiten. Damit ist eine noch flexiblere Verkettung der Bearbeitungsmaschine mit vor- und nachgelagerten Prozessen möglich.

Eine erfindungsgemäße Bearbeitungsmaschine nutzt ein Werkstückmagazin mit zwei zueinander im rechten Winkel angeordneten Teilgruppenplätzen, die um eine Drehachse schwenkbar sind, die unter einem Winkel von 45° zu jedem der Teilgruppenplätze angeordnet ist. Durch eine 180°-Schwenkbewegung tauschen beide Teilgruppenplätze ihre räumliche Orientierung und ihren Ort. Während der eine Teilgruppenplatz vertikal orientiert ist, ist der andere Teilgruppenplatz horizontal orientiert. Der vertikal orientierte Teilgruppenplatz ist ideal für die Bestückung der Spannfutter bzw. -vorrichtung, während der horizontal orientierte Teilgruppenplatz ideal für das Zusammenwirken mit einem Portallader oder auch einer manuellen Bedienperson orientiert ist. Damit ist das erfindungsgemäße Prinzip an dieser Ausführungsform in besonders vorbildlicher Weise verwirklicht.

Die Figuren zeigen:
Figur 1 Beispiel einer nicht beanspruchten Bearbeitungsmaschine, in äußerst schematisierter Darstellung,
Figur 2 die Bearbeitungsmaschine nach Figur 1, in Seitenansicht,
Figur 3 Beispiel der Kinematik eines nicht beanspruchten Werkstückmagazins, in schematisierter perspektivischer Darstellung,
Figur 4 die Kinematik des Werkstückmagazins nach Figur 3, in Seitenansicht,
Figur 5 und 6 alternative kinematische Anordnungen eines nicht beanspruchten Werkstückmagazins, in Seitenansicht,
Figur 7 eine kinematische Veranschaulichung eines nicht beanspruchten Werkzeugmagazins mit mehreren Teilgruppen, von denen eine in Übergabeposition und eine andere in Ladeposition sowie weitere in Zwischenpositionen stehen, sowie
Figur 8 eine erfindungsgemäße Bearbeitungsmaschine mit Werkzeugmagazin in Drehschwenkanordnung, in schematisierter Seitenansicht.

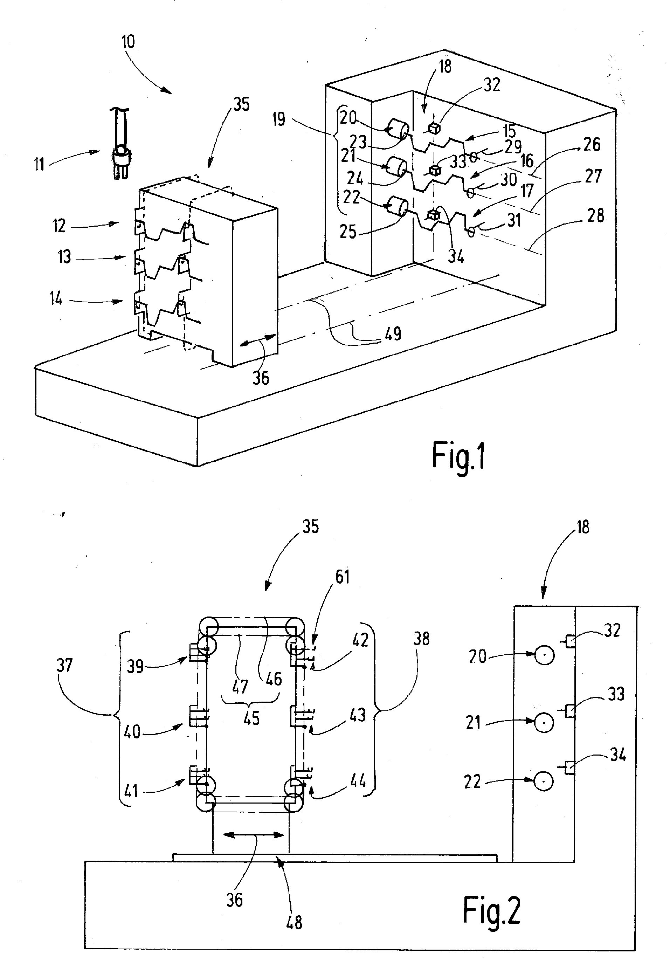

In Figur 1 ist eine Bearbeitungsmaschine 10 veranschaulicht, die typischerweise zu einer nicht weiter veranschaulichten, miteinander hinsichtlich des Teileflusses verketteten Gruppe weitere Bearbeitungsmaschinen gehört. Zur Verkettung, d.h. zum Transport der Teile zwischen den Maschinen, dient zum Beispiel eine Portalladevorrichtung 11, die in Figur 1 anhand ihres Greifers veranschaulicht ist. Dieser dient dazu, Teile, im vorliegenden Ausführungsbeispiel teilbearbeitete Kurbelwellen 12, 13, 14, zu der Bearbeitungsmaschine 10 zu führen oder von dieser wegzuführen, während andere Teile (Kurbelwellen) 15, 16, 17 in Bearbeitung sind.

Zur Bearbeitung der Kurbelwellen 15 bis 17 weist die Bearbeitungsmaschine 10 eine Bearbeitungsstation 18 mit mehreren Bearbeitungsplätzen auf. Zu diesen gehört eine Gruppe 19 von Bearbeitungsplätzen mit Spindeln 20, 21, 22, die mit Spannfuttern 23 bis 25 versehen sind (hier sind auch pneumatische, hydraulische oder elektrische Greifer denkbar, dadurch werden die Wellen starr eingespannt. Kommt beim Ablängen und Zentrieren sowie bei der Flanschbearbeitung zum Einsatz, Drehbare Futter nur beim Ölkanalbohren). Die Spindeln 20 bis 22 legen zueinander parallele Drehachsen 26, 27, 28 fest, die vorzugsweise horizontal ausgerichtet und vertikal übereinander angeordnet sind. Die Kurbelwellen 15, 16, 17 sind an jeweils einem Ende von dem jeweiligen Spannfutter 23, 24, 25 aufgenommen. An ihrem gegenüber liegenden anderen Ende sind sie jeweils durch Abstützeinrichtungen 29, 30, 31 gelagert. Es kann sich dabei um Reitstöcke, Lagerzangen oder dergleichen handeln.

Die Bearbeitungsstation 18 weist mindestens einen, vorzugsweise mehrere, Bearbeitungsköpfe 32, 33, 34 auf, die dazu dienen, die Kurbelwellen 15, 16, 17 oder sonstigen Werkstücke zu bearbeiten, beispielsweise indem Bohrungen angebracht oder sonstige Bearbeitungen vorgenommen werden, wie beispielsweise Drehen, Drehfräsen, Schleifen, Rollieren oder dergleichen.

Um die Kurbelwellen 15, 16, 17 aus der Bearbeitungsstation heraus und die Kurbelwellen 12, 13, 14 in die Bearbeitungsstation hinein zu führen (oder umgekehrt), ist ein Werkstückmagazin 35 vorgesehen, das fest angeordnet oder, wie in Figur 2 durch einen Pfeil 36 veranschaulicht, zu der Bearbeitungsstation 18 hin und von dieser weg verfahrbar ist. Das Werkstückmagazin weist zwei Teilgruppen 37, 38 vom Werkstückaufnahmeplätzen 39, 40, 41 bzw. 42, 43, 44 auf. Die erste Teilgruppe 37 steht in Ladeposition. Die zweite Teilgruppe 38 steht in Übergabeposition. Die Ladeposition ist für den Portallader 11 oder eine Bedienperson zugänglich. Die Übergabeposition ist so gewählt, dass höchstens eine Linearbewegung in Richtung des Pfeils 36 erforderlich ist, um die in den Werkstückaufnahmeplätzen 42 bis 44 befindlichen Wellen oder sonstigen Teile in die Futter der Spindeln 20 bis 22 zu befördern. Damit ist das Handling der in den Werkstückaufnahmeplätzen 39, 40, 41 befindlichen Teile möglich, ohne das Werkstückmagazin 35 nach der Übergabe neuer Teile an die Bearbeitungsstation 18 im Sinne einer Vertauschung der Teilgruppen 37, 38 noch bewegen zu müssen oder auch im Sinne einer Positionierbewegung in die Übergabeposition. Außerdem werden die in den Werkstückaufnahmeplätzen 42 bis 44 befindlichen Wellen oder sonstigen Teile gruppenweise, d.h. zeitgleich in die Futter 23, 24, 25 (bzw. alternative Spannstellen wie Greifer) überführt und aus diesen übernommen.

Zu dem Werkstückmagazin gehören lediglich zwei Positioniereinrichtungen, nämlich eine Gruppentransporteinrichtung 45, zu der z.B. zwei um Rollen geführte Ketten 46, 47 und zugehörigen Kettenräder, Wellen und Antriebsmotoren gehören, sowie (optional) eine Magazin-Positioniereinrichtung 48, mittels derer das Werkstückmagazin 35 auf Führungen entlang eines in Figur 1 durch zwei gestrichelten Linien 49 markierten Wegs in Richtung des Pfeils 36 bewegbar ist.

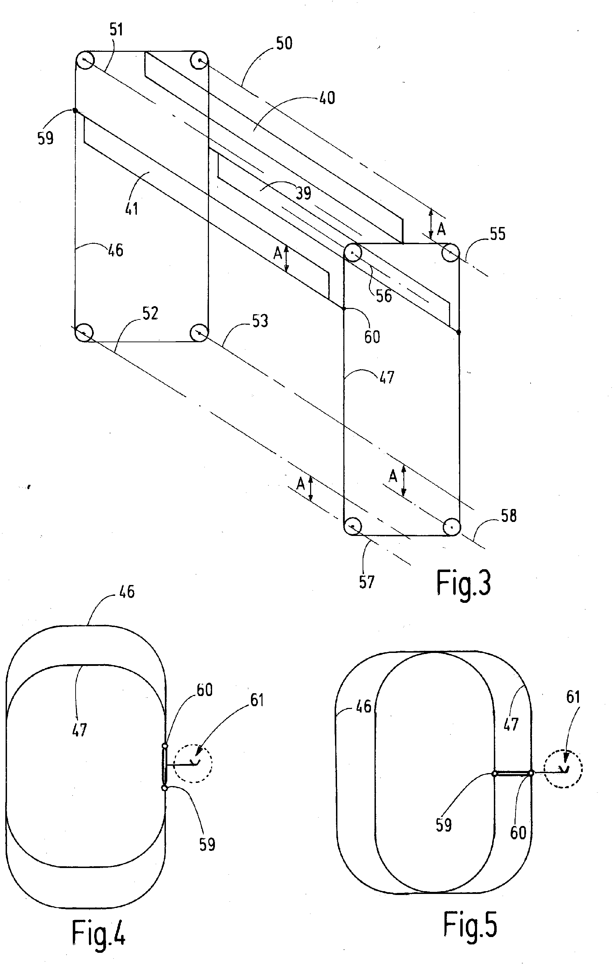

Die beiden Ketten 46, 47 bewegen die Werkstückaufnahmeplätze 39 bis 44 nach dem Paternoster-Prinzip. Dazu ist die bevorzugte Kinematik in Figur 3 veranschaulicht. Wie ersichtlich, sind die Ketten 46, 47 jeweils um mehrere, beispielsweise vier Kettenräder geführt und als Endlosketten, d.h. geschlossene Schleifen, ausgebildet. Die Kettenräder sind dabei beispielsweise jeweils im Rechteck angeordnet, wobei alle um zueinander parallele Drehachsen 50 bis 58 drehbar gelagert sind. Die Drehachsen 50 bis 53 der Kette 47 sind dabei gegen die Drehachsen 55 bis 58 der Kettenräder der Kette 46 um einen Abstand A versetzt. Durch diesen Versatz ist es möglich, die Werkstückaufnahmeplätze 39, 40, 41, wie in Figur 3 dargestellt (und gleichermaßen die nicht dargestellten Werkstückaufnahmeplätze 42 bis 44), mit konstanter Winkelorientierung zu bewegen. Dazu wird exemplarisch auf den Werkstückaufnahmeplatz 41 verwiesen, der über Gelenkverbindungen 59, 60 mit der Kette 46 bzw. 47 verbunden ist. Die Gelenkverbindungen 59, 60, die an den beiden einander gegenüber liegenden Enden des Werkstückaufnahmeplatzes 41 bzw. den hier vorhandenen Teileträger angeordnet sind, sind in gleicher Richtung um den Abstand A gegeneinander versetzt, wie es bei den Achsen 50 bis 53 sowie 55 bis 58 jeweils paarweise der Fall ist.

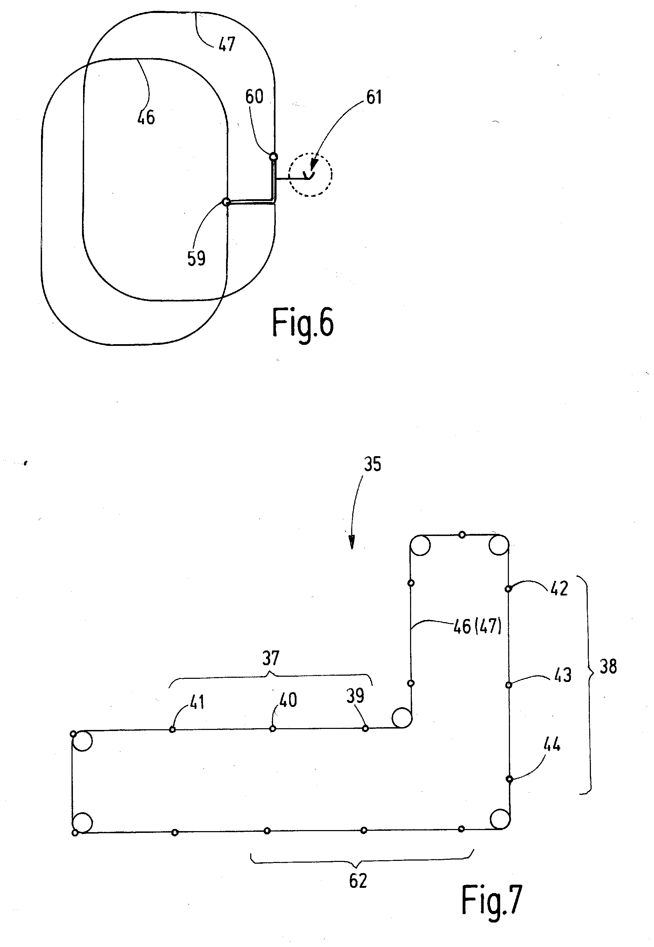

Diese Ausbildung der Magazintransporteinrichtung 48 ermöglicht die Verwendung offener Aufnahmen 61, für den Transport der Wellen oder sonstigen Teile, wie es exemplarisch aus Figur 4 sowie schematisch auch aus Figur 2 hervorgeht. In dieser offenen Aufnahme 61, die offene Schalen, Prismen oder sonstige maulartige Ausnehmungen sind, können die Wellen von dem Portallader 11 oder Bedienpersonen einfach eingelegt werden. Durch die Beibehaltung der räumlichen Orientierung der Werkstückaufnahmeplätze 39 bis 44 beim synchronen Umlauf der Ketten 46, 47 behalten die Aufnahmen 61 ihre räumliche Orientierung bei. Dies gilt auch, wenn der Versatz der Ketten 46, 47, wie es Figur 5 und 6 veranschaulichen, nicht vertikal, sondern zusätzlich oder allein in Horizontalrichtung festgelegt ist. Auch müssen die Kettenräder nicht zwangsläufig im Rechteck angeordnet sein. Sie könne an den Ecken eine Trapezes, eines Dreiecks oder eines beliebigen Mehrecks angeordnet sein.

Bei der schematisch veranschaulichten Werkstückaufnahme 61 handelt es sich im Falle von Kurbelwellen um beispielsweise zwei voneinander beabstandete Prismenauflagen, Haken oder dergleichen, die gegen einander einen Vertikalversatz haben können. Dies ist schematisch in Figur 2 veranschaulicht. Während eine dieser Aufnahmen zum Beispiel an einem Hauptlager der Kurbelwelle angreift, kann die andere an einem Hubzapfen angreifen. Dadurch ist die Winkelposition der aufgenommenen Kurbelwelle mit ausreichender Genauigkeit festgelegt.

Es wird aber darauf hingewiesen, dass die Gruppentransporteinrichtung 45 auch ohne Versatz der Ketten 46, 47 auskommen kann. Laufen die Ketten über Kettenräder mit konzentrischen Achsen, d.h. in Seitenansicht, anders als in den Figuren 4 bis 6 miteinander deckungsgleich, stehen von den Ketten getragene Werkstückaufnahmemittel jeweils radial von den Ketten ab. Die Werkstückaufnahmemittel können dann nicht, wie die Werkstückaufnahme 61, offen ausgebildet sein. Sie müssen vielmehr schließend, zum Beispiel nach Art von Greifern ausgebildet sein. Dies liegt im Rahmen der Möglichkeiten der Ausführung der Erfindung.

Alle vorstehend beschriebenen Ausführungsformen der Erfindung können gemäß Figur 7 abgewandelt sein. In Figur 7 sind wiederum zwei Teilgruppen 37, 38 von Werkstückaufnahmeplätzen 39 bis 44 veranschaulicht. Zwischen diesen Teilgruppen sind jedoch weitere Teilgruppen vorgesehen, die entlang der Kette 46 (47) als Punkte veranschaulicht sind. Eine solche Teilgruppe 62 ist im unteren Teil des Strangs der Ketten 46, 47 exemplarisch markiert. Diese Teilgruppe 62 sowie weitere Teilgruppen können als Zwischenspeicherplätze dienen, um die Speicherkapazität des Werkstückmagazins 35 zu erhöhen.

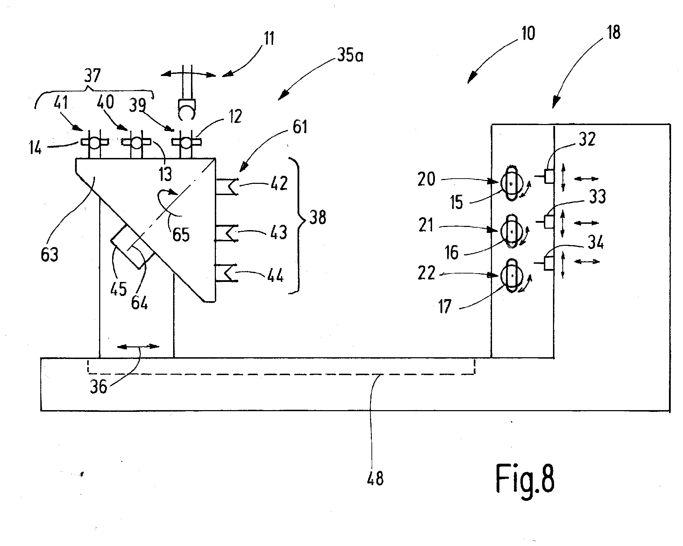

Die Erfindung betrifft aber Werkstückmagazine 35 mit Kettenantrieb nicht Figur 8 veranschaulicht ein abgewandeltes Werkstückmagazin 35a mit einem Schwenkträger 63. Dieser weist eine erste Teilgruppe 37 von horizontal nebeneinander angeordneten ersten Werkstückaufnahmeplätzen 39 bis 41 und eine zweite Teilgruppe 38 von vertikal übereinander angeordneten zweiten Werkstückaufnahmeplätzen 42 bis 44 auf.

Der Schwenkträger 63 ist um eine Schwenkachse 64 drehbar, die unter einem Winkel von 45° sowohl zu der von den ersten Teilaufnahmeplätzen 39 bis 41 festgelegten Ebene sowie auch unter einem Winkel von 45° zu der von dem zweiten Werkstückaufnahmeplätzen 42 bis 44 festgelegten Ebene steht. Eine durch den Pfeil 65 angedeutete Schwenkbewegung um die Achse 64 lässt die Werkstückaufnahmeplätze 39 bis 41 der ersten Teilgruppe den Platz mit den Werkstückaufnahmeplätzen 42 bis 44 der zweiten Teilgruppe 38 tauschen. Ansonsten gilt die vorige Beschreibung, soweit gleiche Bezugszeichen angebracht sind, ohne erneute Bezugnahme entsprechend. Die Gruppentransporteinrichtung 45 wird bei dieser Ausführungsform durch den Schwenkträger 63 und seine zugehörige Schwenkantriebseinrichtung gebildet.

Die Arbeitsweise einer erfindungsgemäßen Bearbeitungsmaschine 10 wird nachfolgend am Ausführungsbeispiel gemäß Figur 8 erläutert:

Es wird zunächst davon ausgegangen, dass die Arbeitsspindeln 20, 21, 22 oder Greifer der Spannvorrichtung mit Kurbelwellen 15, 16, 17 versehen sind, die von den Bearbeitungseinheiten 32 bis 34 bearbeitet werden. Die Bearbeitungseinheiten 32 bis 34 können dazu, wie in Figur 8 durch Pfeile angedeutet, entsprechend bewegt werden. Es ist auch möglich, dazu die Bearbeitungsstation 18 zu bewegen. Die Axiale Relativbewegung zwischen den Werkstücken 15, 16, 17 und den Werkzeugen kann durch Bewegung der Werkstücke 15, 16, 17 erreicht werden. Außerdem ist es möglich, die Kurbelwellen 15 bis 17 in vorgesehene Drehpositionen zu überführen oder drehen zu lassen oder auch starr, insbesondere unverdrehbar einzuspannen. Die Werkstückaufnahmeplätze 42 bis 44 der zweiten Teilgruppe 38 des Werkstückmagazins 35a sind leer. Die entsprechenden Werkstückaufnahmen sind hier als Greifer ausgebildet und vertikal übereinander positioniert. In der dargestellten Position kann der Portallader die Werkstückaufnahmeplätze 39 bis 41 der ersten Teilgruppe 37 mit zu bearbeitenden Wellen 12, 13, 14 bestücken. Ist dies geschehen und sind die Wellen 15 bis 17 fertig bearbeitet, kann die Magazin-Transporteinrichtung 48 aktiviert werden, um das Werkstückmagazin 35a in Richtung des Pfeils 36 zu der Bearbeitungsstation 18 hin zu bewegen und die Wellen 15, 16, 17 zu übernehmen.

Nach Übernahme der Wellen wird die Magazin-Transporteinrichtung 48 aktiviert, die daraufhin den Schwenkträger 63 um die Achse 64 um 180° dreht. Die Teilgruppen 37, 38 wechseln ihren Platz. Damit sind die Werkstückaufnahmeplätze 42 bis 44 der zweiten Teilgruppe 38 nun in einer horizontalen Ebene und die Werkstückaufnahmeplätze 39 bis 41 der ersten Teilgruppe 37 vertikal übereinander angeordnet. In dieser Position können die Wellen 12, 13, 14 gegebenenfalls unter kurzer Zustellbewegung in Richtung des Pfeils 36 unter Zuhilfenahme der Magazin-Transporteinrichtung 48 vor den Spindeln 20, 21, 22 positioniert und von diesen übernommen werden. Die Magazin-Transporteinrichtung 48 kann nun das Werkstückmagazin 35a wieder in den Zugangsbereich des Portalladers 11 fahren, der sofort Zugang zu den nun horizontal positionierten oben frei zutage liegenden zuvor in der Bearbeitungsstation 18 bearbeiteten Wellen 15, 16, 17 hat.

Zum Abführen der bearbeiteten Wellen und zum Heranführen neuer Wellen hat der Portallader 11 die maximal zur Verfügung stehende Zeit, die nicht durch Umpositioniervorgänge des Werkstückmagazins 35a beeinträchtigt ist.

Erfindungsgemäß ist bei einer Bearbeitungsmaschine ein Werkstückmagazin 35a vorgesehen, das dazu eingerichtet ist, Werkstücke, insbesondere Kurbelwellen, gruppenweise an eine Bearbeitungsstation 18 zu übergeben oder von dieser zu übernehmen. Das Werkstückmagazin 35a unterscheidet eine Ladeposition und eine Übergabeposition. In der Ladeposition wie auch in der Übergabeposition sind die Teile, vorzugsweise Wellen, insbesondere Kurbelwellen, parallel zueinander in einer gemeinsamen Ebene orientiert. Die Werkstückaufnahmeplätze sind in zwei Teilgruppen unterteilt. Das Werkstückmagazin ist so beschaffen, dass die Werkstückaufnahmeplätze einer Teilgruppe und einer anderen Teilgruppe in einem einzigen Transportvorgang von der Ladeposition in die Übergabeposition wechseln und umgekehrt. Ist die eine Teilgruppe in Übergabeposition, befindet sich eine andere in Ladeposition. Damit werden Umpositioniervorgänge während des Be- oder Entladens des Werkstückmagazins vermieden, wodurch das Zeitfenster für die Bedienung des Werkstückmagazins und somit die Zeit für das Be- und Entladen desselben maximiert wird. Es sind immer wenigstens zwei Teilgruppen vorhanden, von denen eine in Ladeposition und die andere in Übergabeposition steht.

### Bezugszeichen

| | |
|---|---|
| 10 | Bearbeitungsmaschine |
| 11 | Portallader |
| 12 - 17 | Teile / Kurbelwellen |
| 18 | Bearbeitungsstation |
| 19 | Gruppe von Bearbeitungsplätzen |
| 20 - 22 | Spindeln |
| 23 -25 | Spannfutter |
| 26 - 28 | Drehachsen |
| 29 - 31 | Abstützeinrichtungen |
| 32 - 34 | Bearbeitungseinheit |
| 35, 35a | Werkstückmagazin |
| 36 | Pfeil |
| 37 | erste Teilgruppe von Werkstückaufnahmeplätzen |
| 38 | zweite Teilgruppe von Werkstückaufnahmeplätzen |
| 39 - 41 | erste Werkstückaufnahmeplätze |
| 42 - 44 | zweite Werkstückaufnahmeplätze |
| 45 | Gruppen-Transporteinrichtung |
| 46, 47 | Ketten |
| 48 | Magazin-Transporteinrichtung |
| 49 | Linien |
| 50 - 58 | Achsen |
| A | Abstand |
| 59, 60 | Gelenkverbindung |
| 61 | Werkstückaufnahme |
| 62 | Teilgruppe |
| 63 | Schwenkträger |
| 64 | Achse |
| 65 | Pfeil |

## Patentansprüche

1. Bearbeitungsmaschine (10):
mit einer Gruppe (19) um zueinander parallel orientierte Achsen (26, 27, 28) drehpositionierbarer oder drehend antreibbarer Spindeln (20, 21, 22) mit jeweils einem Spannfutter (23, 24, 25), um untereinander gleichartige Wellen (15, 16, 17) zur Bearbeitung aufzunehmen,
wobei jedem Spannfutter (23, 24, 25) gegenüberliegend eine Abstützeinrichtung (29, 30, 31) vorgesehen ist, um die jeweilige Welle (15, 16, 17) an ihrem anderen Ende abzustützen,
mit mindestens einem Bearbeitungswerkzeug (32 - 34), das den Spindeln (20, 21, 22) zugeordnet ist, um die Wellen (15, 16, 17) zu bearbeiten,
wobei die Bearbeitungsmaschine ein Werkstückmagazin (35a) aufweist, das zwei Teilgruppen (37, 38) von Werkstückaufnahmeplätzen (39, 40, 41; 42, 43, 44) aufweist, die jeweils so groß sind, wie die Gruppe (19) der Spindeln (20, 21, 22)
**dadurch gekennzeichnet, dass** die Teilgruppen durch eine Gruppen-Transporteinrichtung (45) bewegbar sind, so dass beide Plätze für Teilgruppen (37, 38) ihre räumliche Orientierung und ihren Ort tauschen können, wobei sich jeweils eine Teilgruppe (37, 38) in Ladeposition und die andere in Übergabeposition befindet,
wobei die zwei zueinander im rechten Winkel angeordnete Plätze für Teilgruppen (37, 38), um eine Drehachse schwenkbar sind, die unter einem Winkel von 45° zu jedem der Plätze für Teilgruppen (37, 38) angeordnet ist,
wobei durch eine 180° Schwenkbewegung beide Plätze für Teilgruppen (37, 38) ihre räumliche Orientierung und ihren Ort tauschen können.

2. Bearbeitungsmaschine nach Anspruch 1, **dadurch gekennzeichnet, dass** eine Magazin-Positioniereinrichtung (48) vorgesehen ist, die dazu eingerichtet ist, das Werkstückmagazin (35, 35a) quer zu den Achsen (26, 27, 28) auf diese hin und von diesen weg zu bewegen, um die Wellen (12 - 17) gruppenweise in die Spannfutter (23, 24, 25) zu überführen oder aus diesen zu übernehmen.

3. Bearbeitungsmaschine nach einem der vorstehenden Ansprüche, **dadurch gekennzeichnet, dass** das Spannfutter (23, 24, 25) zum Fassen des Wellenendes zum unverdrehbaren Spannen der Welle eingerichtet ist.

4. Bearbeitungsmaschine nach einem der vorstehenden Ansprüche, **dadurch gekennzeichnet, dass** die Abstützeinrichtung (29, 30, 31) das Wellenende unter Freilassung der Stirnfläche umfassen oder als Zentrierdorn ausgebildet ist.

5. Bearbeitungsmaschine nach einem der vorstehenden Ansprüche, **dadurch gekennzeichnet, dass** die Aufnahmeplätze (39, 40, 41; 42, 43, 44) mit oben offenen Auflagen für die Wellen (15, 16, 17) versehen sind.

6. Bearbeitungsmaschine nach Anspruch 5, **dadurch gekennzeichnet, dass** die Aufnahmen in Werkstückwechselposition oberhalb der Achsen (26, 27, 28) der Spindeln (20, 21, 22) angeordnet sind und dass das Werkstückmagazin (35) Wellenaufnahmen zur exzentrischen Aufnahme derselben aufweist.

7. Verfahren zum Werkstückwechsel mittels eines Werkstückwechselmagazins (35a) zur gruppenweisen Werkstückübergabe in einer Werkzeugmaschine nach einem der vorstehenden Ansprüche,
wobei in dem Werkstückwechselmagazin (35a) sowohl während der Be- und Entladung des Werkstückwechselmagazins (36) als auch während der Werkstückübergabe an Spannfutter (23, 24, 25) oder Werkstückübernahme aus diesen mindestens eine Teilgruppe (37) von Werkstücken in Ladeposition und eine andere Teilgruppe (38) in Bearbeitungsposition gehalten wird, wobei die zwei Teilgruppen (37, 38) zueinander im rechten Winkel angeordnet sind und durch eine Gruppen-Transporteinrichtung (45) um eine Drehachse geschwenkt werden, die unter einem Winkel von 45° zu jedem der Plätze für Teilgruppen (37, 38) angeordnet ist, so dass durch eine 180° Schwenkbewegung beide Plätze für Teilgruppen (37, 38) ihre räumliche Orientierung und ihren Ort tauschen, wobei jeweils eine Teilgruppe (37, 38) in Ladeposition und die andere in Übergabeposition überführt wird, wobei in dem Werkstückwechselmagazin (35a) in jeder Teilgruppe eine Anzahl von Werkstücken bereitgehalten wird, die mit der Anzahl von Spannfuttern (23, 24, 25) übereinstimmt.

## Claims

1. Processing machine (10):
with a group (19) of spindles (20, 21, 22) which can be positioned rotationally or driven rotationally about axes (26, 27, 28) that are oriented parallel to each other, each spindle having a clamping chuck (23, 24, 25) in order to receive mutually identical shafts (15, 16, 17) for processing,
wherein a support device (29, 30, 31) is positioned opposite each clamping chuck (23, 24, 25) in order to support the respective shaft (15, 16, 17) at its other end,
with at least one processing tool (32 - 34) assigned to the spindles (20, 21, 22) for processing the shafts (15, 16, 17),
wherein the processing machine comprises a workpiece magazine (35a) having two part groups (37, 38) of workpiece receiving sites (39, 40, 41; 42, 43, 44), each of which is as large as the group (19) of spindles (20, 21, 22),
**characterised in that** the part groups can be moved by a group transport device (45) so that the two sites for part groups (37, 38) can exchange their physical orientation and location,
wherein in each case, one part group (37, 38) is in the loading position and the other in the delivery position,
wherein the two sites for part groups (37, 38) are arranged at right angles to each other and are pivotable about a rotational axis which is arranged at an angle of 45° to each of the sites for part groups (37, 38),
wherein by a 180° pivot movement, the two sites for part groups (37,38) can exchange their physical orientation and location.

2. Processing machine according to claim 1, **characterised in that** a magazine positioning device (48) is provided which is configured to move the workpiece magazine (35, 35a) towards the axes (26, 27, 28) and transversely thereto in order to transfer the shafts (12 - 17) in groups to the clamping chucks (23, 24, 25) or receive these therefrom.

3. Processing machine as claimed in one of the preceding claims, **characterised in that** the clamping chuck (23, 24, 25) is configured to hold the shaft end for non-rotatable clamping of the shaft.

4. Processing machine as claimed in any of the preceding claims, **characterised in that** the support device (29, 30, 31) surrounds the shaft end while leaving the end face free, or is configured as a centring mandrel.

5. Processing machine as claimed in any of the preceding claims, **characterised in that** the receiving sites (39, 40, 41; 42, 43, 44) are provided with supports which are open at the top for the shafts (15, 16, 17).

6. Processing machine according to claim 5, **characterised in that** the receivers are arranged above the axes (26, 27, 28) of the spindles (20, 21, 22) in the workpiece change position, and that the workpiece magazine (35) has shaft receivers for receiving these eccentrically.

7. Method for workpiece change by means of a workpiece change magazine (35a) for handover of workpieces in groups into a machine tool as claimed in any of the preceding claims,
wherein in the workpiece change magazine (35a), both during loading/unloading of the workpiece change magazine (36¹) and during handover of workpieces to clamping chucks (23, 24, 25) or receiving of workpieces therefrom, at least one part group (37) of workpieces is held in the loading position and another part group (38) is held in the processing position, wherein the two part groups (37, 38) are arranged at right angles to each other and are pivoted by the group transport device (45) about a rotational axis which is arranged at an angle of 45° to each of the sites for part groups (37, 38), so that by a 180° pivot movement, the two sites for part groups (37, 38) exchange their physical orientation and location,
wherein in each case one part group (37, 38) is transferred into the loading position and the other into the delivery position,
wherein the workpiece change magazine (35a) in each part group holds a number of workpieces which corresponds to the number of clamping chucks (23, 24, 25).

## Revendications

1. Machine d'usinage (10) :
comprenant un groupe (19) de broches (20, 21, 22) pouvant être positionnées angulairement ou pouvant être entraînées en rotation autour d'axes (26, 27, 27) orientés parallèlement les uns aux autres, et comportant chacune un mandrin de serrage (23, 24, 25), aux fins de recevoir des arbres (15, 16 17) identiques entre eux, en vue de l'usinage,
sachant qu'il est prévu en vis-à-vis de chaque mandrin de serrage (23, 24, 25), un dispositif d'appui (29, 30, 31) destiné à fournir un appui à l'arbre (15, 16, 17) respectif, à son autre extrémité,
comprenant au moins un outil d'usinage (32 à 34) qui est associé aux broches (20, 21, 22) en vue de l'usinage des arbres (15, 16, 17),
la machine d'usinage présentant un magasin de pièces à usiner (35a) qui comporte deux sous-groupes (37, 38) d'emplacements de réception de pièces (39, 40, 41 ; 42, 43, 44) qui sont chacun aussi grands que le groupe (19) des broches (20, 21, 22),
**caractérisée en ce que** les sous-groupes peuvent être déplacés par un dispositif de transport de groupes (45), de sorte que les deux emplacements pour des sous-groupes (37, 38) peuvent permuter leur orientation dans l'espace et leur lieu,
un sous-groupe (37, 38) se trouvant respectivement en position de chargement et l'autre en position de transfert,
les deux emplacements pour sous-groupes (37, 38), qui sont disposés à angle droit l'un par rapport à l'autre, pouvant être pivotés autour d'un axe de rotation qui est disposé sous un angle de 45 ° par rapport à chacun des emplacements pour sous-groupes (37, 38),
un mouvement pivotant de 180 ° permettant aux deux emplacements pour sous-groupes (37, 38) de permuter leur orientation dans l'espace et leur lieu.

2. Machine d'usinage selon la revendication 1, **caractérisée en ce qu'**il est prévu un dispositif de positionnement de magasin (48) qui est conçu pour déplacer le magasin de pièces à usiner (35, 35a), perpendiculairement aux axes (26, 27, 28), en les rapprochant de ceux-ci et en les éloignant, afin d'amener les arbres (12 à 17) par groupes dans les mandrins de serrage (23, 24, 25) ou de les prendre en charge à partir de ceux-ci.

3. Machine d'usinage selon l'une des revendications précédentes, **caractérisée en ce que** le mandrin de serrage (23, 24, 25) destiné à saisir l'extrémité d'arbre est conçu pour le serrage sans rotation de l'arbre.

4. Machine d'usinage selon l'une des revendications précédentes, **caractérisée en ce que** le dispositif d'appui (29, 30, 31) entoure l'extrémité d'arbre, en laissant la face frontale dégagée, ou est réalisé sous forme de mandrin de centrage.

5. Machine d'usinage selon l'une des revendications précédentes, **caractérisée en ce que** les emplacements de réception (39, 40, 41 ; 42, 43, 44) sont pourvus de supports ouverts en haut pour les arbres (15, 16, 17).

6. Machine d'usinage selon la revendication 5, **caractérisée en ce que** dans la position de changement de pièce à usiner, les éléments de réception sont disposés au-dessus des axes (26, 27, 28) des broches (20, 21, 22), et **en ce que** le magasin de pièces à usiner (35) présente des logements d'arbres destinés à la réception excentrique de ceux-ci.

7. Procédé de changement de pièce à usiner, au moyen d'un magasin de changement de pièce à usiner (35a), en vue du transfert de pièces par groupe dans une machine-outil selon l'une des revendications précédentes,
selon lequel, dans le magasin de changement de pièce à usiner (35a), aussi bien pendant le chargement et le déchargement du magasin de changement de pièce à usiner (36) que pendant le transfert de pièce au mandrin de serrage (23, 24, 25) ou la reprise de pièce à partir de celui-ci, au moins un sous-groupe (37) de pièces est maintenu en position de chargement et un autre sous-groupe (38) est maintenu en position d'usinage, les deux sous-groupes (37, 38) étant disposés à angle droit l'un par rapport à l'autre et étant pivotés par un dispositif de transport de groupes (45) autour d'un axe de rotation qui est disposé sous un angle de 45 ° par rapport à chacun des emplacements destinés à des sous-groupes (37, 38), de sorte que suite à un mouvement pivotant de 180 °, les deux emplacements pour sous-groupes (37, 38) permutent leur orientation dans l'espace et leur lieu, sachant que chaque fois un sous-groupe (37, 38) est amené en position de chargement et l'autre en position de transfert, sachant que dans le magasin de changement de pièce à usiner (35a), un certain nombre de pièces à usiner est tenu prêt dans chaque sous-groupe, qui correspond au nombre de mandrins de serrage (23, 24, 25).
